# EUROPÄISCHE PATENTSCHRIFT

(11) **EP 2 789 239 B1**
(45) Veröffentlichungstag und Bekanntmachung des Hinweises auf die Patenterteilung: **19.10.2016**
(21) Anmeldenummer: 13163618.5
(22) Anmeldetag: 12.04.2013
(51) Int. Cl.: A21C 9/08, A21C 11/16, A22C 7/00

(54) **Vorrichtung und Verfahren zum Herstellen kugelförmig geformter Produkte**
Device and method for producing spherical molded products
Dispositif et procédé de fabrication de produits moulés en forme de boule

(43) Veröffentlichungstag der Anmeldung: 15.10.2014
(73) Patentinhaber: VEMAG Maschinenbau GmbH, 27283 Verden/Aller (DE)
(72) Erfinder: Walther, Heiko, 27337 Reer (DE); Weller, Frank, 27283 Verden (DE)
(74) Vertreter: Eisenführ Speiser

(56) Entgegenhaltungen:
- DE-T2- 69 015 467
- US-A- 3 797 069
- US-A- 5 270 070

## Beschreibung

Die vorliegende Erfindung bezieht sich auf eine Vorrichtung und ein Verfahren zum Herstellen kugelförmig geformter Produkte aus einer pastösen Masse, wie Wurstbrät, Teig oder dergleichen.

Die Erfindung betrifft insbesondere eine Vorrichtung mit zumindest einer Zuführeinrichtung zum Bewegen der pastösen Masse entlang eines Förderweges, einer der Zuführeinrichtung nachgeschalteten Portioniereinrichtung zum Formen der pastösen Masse zu Kugeln und einer Transporteinrichtung zum Abführen der mittels der Portioniereinrichtung erzeugten Kugeln.

Bekannte Vorrichtungen und Verfahren werden insbesondere zur Herstellung von Produkten aus einer pastösen Masse eingesetzt, wobei aus der pastösen Masse, wie zum Beispiel Wurstbrät oder Teig, eine Vielzahl von Produkten gleicher Größe und Form erzeugt werden. Die erzeugten Produkte, wie zum Beispiel Fleischbällchen oder Kroketten, sind häufig unmittelbar nach der Herstellung mittels einer Transporteinrichtung für eine nachfolgende Weiterverarbeitung oder zu deren Verpackung abzuführen.

Aus der US 3,797,069 A oder der EP 0 194 863 A2 ist eine Vorrichtung zum Herstellen von dreidimensional geformten, kugelförmigen Produkten aus einer pastösen Masse bekannt, die eine Zuführeinrichtung für die entlang eines Förderweges zu bewegende Masse aufweist. Der Zuführeinrichtung ist eine Portioniereinrichtung nachgeschaltet bzw. nachgeordnet, mittels der aus dem ungeformten pastösen, insbesondere teigartigen Produktstrom häufig mehrere Kugeln gleichzeitig hergestellt werden. Die Portioniereinrichtung weist zu diesem Zweck zwei Schneidplatten mit jeweils mehreren Durchbrüchen auf, von denen eine der Platten verschiebebeweglich aufgenommen ist. Aufgrund der Förderbewegung der pastösen Masse durch die Zuführeinrichtung und der Relativbewegung der Schneidplatten zueinander werden in vorbestimmten Zeitabständen kugelförmige Produkte, insbesondere Wurstbällchen, erzeugt. Die hergestellten Fleisch-oder Teigprodukte fallen auf ein Transportband oder eine Transportschalen aufweisende Fördereinrichtung, mit dem die erzeugten Kugeln abgeführt werden.

Des Weiteren ist aus US 5,270,070 A ein Teiler zum Trennen einer Vielzahl von Teigströmen in einzelne Teigportionen bekannt. Die Teigströme strömen durch Leitungen eines Teig-Abgabeblockes und werden an den Auslässen des Abgabeblockes ausgegeben. Rotierend an der Vorderseite des Abgabeblockes angeordnete Trennmesser streifen die austretenden Teigportionen entlang der Vorderseite ab und drücken diese auf die Oberfläche des Transportbandes. Nach der Übergabe an das Transportband wird jede Teigportion entlang von oberhalb der Oberfläche des Transportbandes ausgerichteten, feststehenden Ausformstäben geführt, mit denen die Teigportionen dann zu Teigbällen gleichmäßiger Form geformt werden.

An den bekannten Vorrichtungen kann es jedoch bei der Verarbeitung von insbesondere stark klebenden Teigen oder auch Fleischprodukten am Ende des Schneid- oder Formprozesses durch die Portioniereinrichtung unter Umständen zu einem ungleichmäßigen Ablösen der zu erzeugenden Kugeln von den Schneidplatten kommen. Das ungleichmäßige Lösen hat dann eine ungeordnete Anordnung der Produkte auf dem Transportband oder in den Schalen der Fördereinrichtung zur Folge. Die ungeordnete bzw. willkürliche Anordnung der Kugeln auf dem Transportband oder den Schalen erschwert wiederum eine Weiterverarbeitung, insbesondere ein mögliches Verpacken, der abgeführten, kugelförmigen Produkte. Derartig erzeugte Produktströme sind entweder von Hand auszurichten oder lassen sich nur unter Verwendung eines aufwendigen Multitrayloaders in die dafür vorgesehenen Verpackungen abfüllen bzw. überführen.

Der Erfindung liegt daher die Aufgabe zugrunde eine Vorrichtung und ein Verfahren zum Herstellen und Abführen formbarer Produkte aufzuzeigen, mit denen sich die abgeführten Produkte auf vorteilhafte Weise anordnen lassen.

Die Erfindung löst die ihr zugrunde liegende Aufgabe bei einer Vorrichtung der vorbezeichneten Gattung dadurch, dass die Portioniereinrichtung eine Auslassöffnung mit einer Vielzahl so nebeneinander angeordneter Auslässe für die zu formenden Kugeln aufweist, dass die ausgegebenen Kugeln sich berühren oder der Abstand zwischen den hergestellten, nebeneinander angeordneten Kugeln kleiner als der Durchmesser der erzeugten Kugeln ist, und dass die Portioniereinrichtung und die Transporteinrichtung derart zueinander angeordnet sind, dass Bereiche der Transporteinrichtung in Transportrichtung eine Anschlagfunktion für die etwa quer zur Transportrichtung in einer Reihe nebeneinander auszurichtenden Kugeln ausbilden.

Der Erfindung liegt die Erkenntnis zugrunde, dass durch den geringen Abstand der Kugeln, wobei die Kugeln sich bestenfalls untereinander berühren, eine vorteilhafte Ausrichtung gewährleistet ist. Damit ist zugleich eine vorteilhaft kompakte Anordnung der vorzugsweise dreidimensional geformten, kugelförmigen Produkte in einer erzeugten Produktreihe gegeben. Über die erfindungsgemäße Anschlagfunktion lassen sich zudem kugelförmige Produkte, die aus einer stark klebenden Masse hergestellt werden, mit geringem konstruktiven Aufwand in zueinander beabstandeten Reihen mit etwa quer zur Transporteinrichtung nebeneinander ausgerichteten Kugeln ausrichten und zu Weiterverarbeitung abführen. Dabei stellt der bevorzugte Einsatz bzw. die Verwendung von Bereichen der Transporteinrichtung zur Ausbildung der Anschlagfunktion für die über die Portioniereinrichtung ausgegebenen Kugeln eine bevorzugte Möglichkeit dar. Ein nachträgliches Korrigieren bzw. Ausrichten der Produkte auf der Transporteinrichtung von Hand ist damit vorteilhaft vermieden, wodurch ein vorteilhaft verringertes Hygienerisiko bei der Verpackung der aus zum Beispiel Wurstbrät oder auch aus Teig hergestellten Kugeln gegeben ist. Die so mit relativ hoher Genauigkeit nebeneinander angeordneten, kugelförmigen Produkte sind dann beispielsweide relativ einfach in jeweils entsprechend zuordbare Verpackungen überführbar. Zur Ausbildung der Anschlagfunktion kann beispielsweise alternativ ein Anschlagelement dienen, dass beweglich aufgenommen und taktweise zwangsgesteuert ist, wobei das Anschlagelement kurzzeitig in die Bewegungsbahn der zum Beispiel mit der Transporteinrichtung abgeführten Kugeln vorsteht, sodass sich die Kugeln an dem Anschlagelement ausrichten. Anschließend wird das Anschlagelement aus der Bewegungsbahn heraus bewegt, wodurch der ungehinderte Weitertransport der geformten Produkte gewährleistet ist.

Vorliegend ist im Rahmen der Erfindung unter der Begrifflichkeit des "dichten Anordnens der Kugeln nebeneinander" zu verstehen, dass der Abstand zwischen den Auslässen der Portioniereinrichtung und damit den hergestellten, nebeneinander angeordneten Kugeln kleiner als der Durchmesser der erzeugten Kugeln ist, vorzugsweise in einem Bereich zwischen 1 und 10 mm, besonders bevorzugt in einem Bereich zwischen 1 und 5 mm liegt. Dadurch ist gewährleistet, dass die Kugeln, welche an der Auslassöffnung der Portioniereinrichtung austreten, so dicht wie möglich nebeneinander bzw. zueinander zwischen der Portioniereinrichtung und der Transporteinrichtung angeordnet sind oder zum Liegen kommen. Aus dem Bereich zwischen Portionier- und Transporteinrichtung werden die Kugeln vorzugsweise über die nachfolgend geformten, kugelförmigen Produkte auf das Transportelement der Transporteinrichtung bewegt. Auch auf dem Transportelement weisen die Kugeln einen vorteilhaft geringen Abstand zueinander auf, wobei zwei zueinander benachbarte Kugeln sich bestenfalls einander berühren. Die Portioniereinrichtung weist insbesondere eine beliebige Anzahl von Auslässen auf, wobei bevorzugt eine Anzahl zwischen 3 und 8 Auslässen an der Portioniereinrichtung vorgesehen ist. Alternativ weist die Portioniereinrichtung weniger als 3 Auslässe oder auch mehr als 8 Auslässe auf.

Nach einer bevorzugten Weiterbildung ist erfindungsgemäß vorgesehen, dass zwischen der Transporteinrichtung und der Portioniereinrichtung ein Spalt ausgebildet ist, welcher dazu eingerichtet ist, dass die geformten beziehungsweise ausgegebenen Kugeln zeitweise mindestens teilweise darin angeordnet sind. Mit dem Vorsehen eines Spaltes zwischen der Portioniereinrichtung und der in Förderrichtung stromabwärts angeordneten Transporteinrichtung ist eine vorteilhafte Möglichkeit zur Umsetzung einer Anschlagfunktion an der erfindungsgemäßen Vorrichtung geschaffen. Die Größe des Spalts zwischen der Portioniereinrichtung und der Transporteinrichtung ist bevorzugt an die Größe der zu erzeugenden Produkte angepasst. Bevorzugt weist der Spalt ein Maß im Bereich zwischen ¼ und ¾ der Durchmesser der erzeugten Kugeln auf. Nach dem Formen der Kugeln durch die Portioniereinrichtung und dem Ausgeben in Richtung der Transporteinrichtung kommen die Kugeln vorzugsweise kurzzeitig im Spalt zwischen der Portioniereinrichtung und der Transporteinrichtung zum Liegen und werden so in einer Linie ausgerichtet und verharren eine Zeitdauer im oder am Spalt. Die kugelförmigen Produkte im Spalt werden insbesondere erst durch die nachfolgend erzeugten bzw. geformten und in Richtung der Transporteinrichtung abgegebenen Produkte auf die Transporteinrichtung bewegt. Im Spalt zwischen der Portioniereinrichtung und der Transporteinrichtung sind dann die nachfolgend geformten Kugeln angeordnet. Die Kugeln kommen während ihrer Verweilzeit vorzugsweise jeweils mit Abschnitten bzw. Bereichen sowohl der Portioniereinrichtung als auch der Transporteinrichtung in Anlage.

Die Portioniereinrichtung weist eine Auslassöffnung auf, und die Transporteinrichtung umfasst ein die Transportbewegung umsetzendes Transportelement, wobei die Auslassöffnung unmittelbar einem Umlenkbereich des Transportelementes zugeordnet ist. Die aus der Auslassöffnung der Portioniereinrichtung austretenden Kugeln werden durch das in Anlage bringen mit dem Umlenkbereich des Transportelementes daran gehindert, direkt vom Transportelement abgeführt zu werden, ohne dass eine zuvor zu erfolgte Ausrichtung in einer Reihe nebeneinander vorgenommen wurde. Aufgrund des Eigengewichts der erzeugten Kugeln bleiben diese selbsttätig im Spalt zwischen der Portioniereinrichtung und dem Umlenkbereich des Transportelementes liegen.

Eine andere Weiterbildung der Erfindung sieht vor, dass die Portioniereinrichtung und/oder die Transporteinrichtung in ihrer Höhe und im Abstand zueinander verstellbar ausgebildet sind. Das gewährleistet eine optimale Anpassung an die gegebenenfalls variierenden Abmessungen der mit der erfindungsgemäßen Vorrichtung zu erzeugenden bzw. zu formenden Kugeln. Das Spaltmaß zwischen der Portioniereinrichtung und der nachfolgend angeordneten Transporteinrichtung lässt sich dementsprechend vorteilhaft einstellen, womit das Durchfallen der Kugeln durch den Spalt vermieden ist. Damit ist eine relativ einfache Anpassung der erfindungsgemäßen Vorrichtung an die Form und die damit verbundenen Abmessungen von ggf. unterschiedlichen, bevorzugt zu Kugeln zu formenden Produkten möglich.

Bevorzugt weist die Auslassöffnung der Portioniereinrichtung mit ihren Auslässen einen Höhenversatz zur Oberseite des Transportelementes der Transporteinrichtung auf, womit bevorzugt das zunächst kurzzeitige Aufstoppen der unmittelbar zuvor von der Portioniereinrichtung erzeugten bzw. geformten Kugeln an den sich fortwährend bewegenden Transportelement sichergestellt ist. Erst mit dem Erzeugen bzw. Formen der nachfolgenden Kugeln durch die Portioniereinrichtung werden die im Spalt befindlichen Kugeln auf das Transportelement der Transporteinrichtung geschoben oder überführt. Die nachfolgenden Kugeln legen sich zunächst wiederum nur kurzzeitig an der Transporteinrichtung an und werden ebenfalls erst durch die danach gefertigten Kugeln auf das Transportelement weiterbewegt. Somit ist eine intermittierende Übergabe der kugelförmigen Produkte zwischen der Portioniereinrichtung und der Transporteinrichtung umgesetzt.

Bevorzugt ist die Förderrichtung der Portioniereinrichtung, bezogen auf eine horizontal verlaufende Ebene, etwa parallel zur Transportrichtung der Transporteinrichtung ausgerichtet, wodurch eine vorteilhaft einfache Übergabe der geformten bzw. erzeugten Kugeln zwischen den verschiedenen Stationen der erfindungsgemäßen Vorrichtung gewährleistet ist. Zudem ist insbesondere das Ausrichten der Kugeln vorteilhaft vereinfacht, da eine gezielte Umlenkbewegung der erzeugten kugelförmigen Produkte in der horizontal verlaufenden Ebene vermieden ist. Die parallele Ausrichtung von Portionier- und Transporteinrichtung birgt weiterhin den Vorteil, dass sich der Spalt zwischen diesen beiden Bearbeitungsstationen der erfindungsgemäßen Vorrichtung, in dem die Kugeln jeweils kurzzeitig angeordnet bzw. zum Liegen kommen, vorzugsweise einfach gleichmäßig ausbilden lässt.

Die Zentralachse der Auslassöffnung weist, bezogen auf eine senkrechte, in Transportrichtung verlaufende Schnittebene zur Mittenachse des Transportelementes einen Winkelversatz in einem Bereich von 10 Grad unterhalb der Mittenachse des Transportelementes bis 40 Grad oberhalb der Mittenachse des Transportelementes auf. Die Portioniereinrichtung, insbesondere die Auslassöffnung der Portioniereinrichtung lässt sich bevorzugt unter einem vorbestimmten Winkel zur Mittenachse des Transportelementes ausrichten, wodurch eine vereinfachte Abgabe der geformten bzw. erzeugten Kugeln an die Transporteinrichtung gewährleistet ist. Die Zentralachse der Auslassöffnung lässt sich zur insbesondere horizontal verlaufenden Mittenachse des Transportelementes bevorzugt in einem Winkelbereich zwischen -10 Winkelgrad, also unterhalb der Mittenachse und 40 Winkelgrad, also oberhalb der Mittenachse, ausrichten.

Vorzugsweise ist die Transporteinrichtung ein Stetigförderer womit sich eine vorteilhaft kontinuierliche Transportbewegung der von der Portioniereinrichtung abzuführenden Kugeln vornehmen lässt. Der bevorzugt kontinuierlich umlaufende Stetigförderer meist bevorzugt ein Endlosband auf, was eine vorteilhafte Möglichkeit der Ausbildung eines Transportelementes der Transporteinrichtung darstellt. Mit einem Endlosband können die aus der pastösen Masse wie zum Beispiel Wurstbrät oder Teig, geformten Kugeln einfach abtransportiert werden, ohne dem Risiko zu unterliegen, dass die bereits entsprechend in Endform gebrachten, kugelförmigen Produkte umgeformt oder deformiert werden.

Nach einer anderen Weiterbildung zeichnet sich die erfindungsgemäße Vorrichtung durch einen Füllstromteiler für eine gleichmäße Verteilung der pastösen Masse auf die einzelnen Förderkanäle an der Portioniereinrichtung aus. Mithilfe des Füllstromteilers ist gewährleistet, dass eine optimale Massen- oder Gewichtsverteilung der pastösen Masse auf die einzelnen Förder- oder Zuführkanäle der Portioniereinrichtung erzielt ist und damit an den Auslässen als Ergebnis Kugeln mit nahezu gleichem Gewicht und gleicher Form vorliegen. Der Füllstromteiler ist vorzugsweise ähnlich einer Flügelzellenpumpe mit einem sich in einer Kammer bewegenden Rotor ausgebildet, wobei die Rotationsachse des Rotors parallel versetzt zur Mittenachse der Kammer angeordnet ist und der Rotor verstellbare Flügelelemente aufweist.

Darüber hinaus ist nach der Erfindung vorgesehen, dass die Portioniereinrichtung wenigstens eine Schneideinrichtung umfasst. Mithilfe der Schneideinrichtung erfolgt zumindest eine Unterteilung der durch die Portioniereinrichtung geführten pastösen Masse in Kugeln vorbestimmter Abmessungen. Bevorzugt ist die Portioniereinrichtung als Schneid- und/oder Formeinrichtung ausgebildet, sodass die aus der pastösen Masse erzeugten als Kugeln ausgebildeten Produkte nicht nur abgetrennt sondern auch gleichzeitig zu dreidimensional geformten Körpern ausgebildet werden. Mit der Schneid- und/oder Formeinrichtung lassen sich beispielsweise etwa kugelförmige oder länglich getreckte Produkte herstellen.

Zu diesem Zweck ist die Schneid- und/oder Formeinrichtung mit zwei aktiv bewegbaren Schneid- und/oder Formplatten ausgerüstet, durch deren Stellung zueinander die Formgebung der aus der pastösen Masse zu erzeugenden bzw. zu formenden Kugeln gezielt gesteuert werden kann. Vorzugsweise werden beide Schneid- und/oder Formplatten gleichzeitig bewegt, was im Gegensatz zu nur einer bewegten Schneidplatte bei vorzugsweise länglichen Produkten den Vorteil einer verbesserten kugelförmigen Ausformung von deren Endbereiche hat. Zudem ist die Gesamtbewegung beider Schneid- und/oder Formplatten vorteilhaft in der Höhe reduziert. Zwischen den Schneidplatten erfolgt eine Bewässerung, was die Abteilung der zu erzeugenden Kugeln von der ungeformten Masse vereinfacht und des Weiteren gelangt das Wasser nicht mit der nachfolgend angeordneten Transporteinrichtung in Kontakt. Der Formprozess der kugelförmigen Produkte wird bevorzugt zum einen über das Bewegen der Schneid-und/oder Formplatten zueinander und zum anderen durch eine Anpassung oder Änderung der Fördermengen- bzw. -geschwindigkeit der pastösen Masse durch die Portioniereinrichtung gesteuert.

Jede Schneid- und/oder Formplatte weist mehrere unmittelbar nebeneinander angeordnete Durchbrüche auf. Die bevorzugt in einem Abstand von weniger als 5 mm zueinander angeordneten Durchbrüche sind in jeweils beiden Schneid- und/oder Formplatte vorgesehen und ermöglichen das Erzeugen von Kugeln in geringem Abstand zueinander. Damit lassen sich die erzeugten Produkte bei der Übergabe von der Portioniereinrichtung an die Transporteinrichtung vorteilhaft kompakt etwa quer zur Transportrichtung nebeneinander aufreihen, wobei sich die Kugeln untereinander sogar vorzugsweise berühren. Bevorzugt sind drei oder mehr Durchbrüche in einer Schneidplatte ausgebildet. Die Durchbrüche in den Schneidplatten weisen entlang ihres Umfangs wenigstens abschnittsweise eine Schneidkante auf und haben insbesondere eine von einer Kreisform abweichende Formgebung.

Die Transporteinrichtung weist einen Abgabebereich für die auf dem Transportelement angeordneten Produktreihen auf, dem eine Fördereinrichtung für Verpackungen zugeordnet ist, welche zur Aufnahme der in Abständen zueinander vom Transportelement abgegebenen Produktreihen eingerichtet sind. Aufgrund der vorteilhaft in einer Reihe nebeneinander und quer zur Transportrichtung ausgerichteten Kugeln ist eine vorteilhaft maschinelle Verpackung der Produkte überhaupt erst realisierbar. Eingriffe von Hand, wodurch ein mögliches Hygienerisiko entstehen kann, sind bei der Weiterverarbeitung der vorzugsweise mit einer erfindungsgemäßen Vorrichtung hergestellten, zu kugel- oder ballförmig geformten Produkte somit vermieden. Über die Fördereinrichtung, welche vorzugsweise Bestandteil eines Schalentransportsystems ist, werden die schalenförmigen Verpackungen, auch bezeichnet als Tray, in den Abgabebereich der Transporteinrichtung bewegt, in dem dann die Übergabe der Produktreihen in die Verpackungen erfolgt. Um eine vorteilhaft hohe Verpackungsdichte der Kugeln innerhalb der Verpackungen zu erzielen, ist es notwendig, die Fördergeschwindigkeiten von der Fördereinrichtung für die Verpackungen und dem Transportelement der Transporteinrichtung, auf dem die Kugeln in zueinander beabstandeten Reihen angeordnet sind, aufeinander abzustimmen. Die Transporteinrichtung weist im Vergleich zur Fördereinrichtung für die Verpackungen eine mindestens um den Faktor 3 bis 10 höhere Förder- bzw. Umlaufgeschwindigkeit auf.

Gemäß einer weiteren bevorzugten Ausgestaltung der Erfindung ist vorgesehen, dass die Fördereinrichtung für die Verpackungen ein abschnittsweise unterhalb des Abgabebereiches der Transporteinrichtung geführter Umlaufförderer ist. Mit dem Einsatz eines Umlaufförderers ist eine konstruktiv einfache Möglichkeit zur Ausbildung einer Fördereinrichtung erzielt, wobei der Umlaufförderer beispielsweise als Kreisförderer, Bandförderer oder Kettenförderer ausgebildet ist. Mit dem Umlaufförderer werden die Verpackungen bevorzugt taktweise verschoben, bzw. jeweils um ein vorbestimmtes Teilstück der Förderstrecke vorwärts bewegt, sodass die fortlaufend geförderten Kugeln an die Verpackungen auf dem Umlaufförderer übergeben werden können. Das Übergeben der Produktreihen an die Verpackungen wird beispielsweise mithilfe einer Sensoreinrichtung erfasst, welche mit einer Steuerelektronik oder Steuerungseinrichtung gekoppelt ist, welche bevorzugt sämtliche Prozesse der erfindungsgemäßen Vorrichtung untereinander koordiniert. Zu diesem Zweck ist die Steuerungseinrichtung jeweils mit der Zuführeinrichtung, der Portioniereinrichtung, der Transporteinrichtung sowie der Fördereinrichtung für die Verpackungen über Signalleitungen verbunden.

Die Erfindung betrifft zudem ein Verfahren zum Herstellen und Abführen dreidimensional geformter, kugelförmiger Produkte aus einer pastösen Masse, wie Wurstbrät, Teig oder dergleichen Massen. Die vorliegende Erfindung löst hierbei die zugrundeliegende Aufgabe einer vorteilhaften Ausrichtung der geformten Kugeln zueinander mit dem erfindungsgemäßen Verfahren, bei dem eine pastöse Masse entlang eines Förderweges bewegt wird, fortlaufend Teile der pastösen Masse zu Kugeln geformt werden, wobei die Kugeln nach dem Ausgeben sich untereinander berühren oder dicht nebeneinander angeordnet sind, die geformten Kugeln quer zu ihrer Förderrichtung in einer Reihe nebeneinander ausgerichtet werden, indem die erzeugten Kugeln zeitweise an einem Anschlag in Anlage gebracht werden, und anschließend die zueinander ausgerichteten Kugeln abgeführt werden. Mit dem in Kontakt bringen der vorzugsweise aus der Portioniereinrichtung abgegebenen Kugeln mit einem Anschlag werden die Produkte zunächst etwa quer zur Transportrichtung in einer Reihe nebeneinander ausgerichtet und nach dem Ausrichten zur Weiterverarbeitung mittels einer Transporteinrichtung abgeführt. Die zueinander ausgerichteten Kugeln einer Produktreihe können sich dabei untereinander berühren oder weisen einen Abstand zueinander auf, der bevorzugt 10 mm oder weniger beträgt.

Das erfindungsgemäße Verfahren wird vorteilhaft weitergebildet, dadurch dass die geformten Kugeln zueinander ausgerichtet werden, indem die erzeugten Kugeln kurzzeitig oder zeitweise mit einem Bereich der Transporteinrichtung in Anlage oder in Kontakt gebracht werden. Das in Kontakt bringen mit vorzugsweise dem Umlenkbereich der Transporteinrichtung, an dem die zuvor geformten kugelförmigen Produkte kurzzeitig zum Liegen kommen, also die Kugeln ohne Bewegung eine vorbestimmte Zeitdauer in ihrer Position verweilen, ist eine vorteilhafte Vereinfachung des Verfahrens erreicht, da ein separat zu steuernder, insbesondere zu taktender Anschlag nicht benötigt wird.

Vorzugsweise werden die an der Transporteinrichtung ausgerichteten Kugeln zum Abführen auf die Transporteinrichtung mittels der nachfolgend geformten Kugeln auf die Transporteinrichtung bewegt. Mit dem Überführen der ausgerichteten kugelförmigen Produkte von der Portioniereinrichtung auf die Transporteinrichtung mittels jeweils nachfolgender Produkte ist eine weitere vorteilhafte Vereinfachung des vorliegenden Verfahrens erreicht. Überflüssige Steuerprozesse und darüber angesteuerte Vorrichtungsteile mit denen die unmittelbar zuvor ausgerichteten dreidimensional geformten Produkte auf das Transportband zu bewegen sind, lassen sich dadurch vermeiden. Durch die nachfolgend an der Portioniereinrichtung ausgegebenen bevorzugt als Kugeln ausgebildeten Produkte oder bereits während des Formens der nachfolgenden kugelförmigen Produkte werden die bereits in dem Spalt zwischen der Portioniereinrichtung und der nachgeschalteten Transporteinrichtung angeordneten Kugeln auf das Transportelement der Transporteinrichtung geschoben. Vorzugsweise wird beim Abführen der ausgerichteten Kugeln durch die nachfolgenden Kugeln eine Kraft nahezu in Transportrichtung erzeugt, was das Überführen der ausgerichteten Reihe von Produkten vereinfacht.

Bevorzugt werden nach einer Weiterbildung der Erfindung die geformten Kugeln unter einem vorbestimmten Winkel mit dem Transportmittel in Anlage gebracht, was beispielsweise in Abhängigkeit von der Art bzw. der Zusammensetzung der pastösen Masse erfolgt, aus der die bevorzugt kugelförmigen Produkte zu formen sind.

Vorzugsweise werden die in Abständen zueinander ausgerichteten Reihen von nebeneinander angeordneten Kugeln abgeführt und anschließend maschinell verpackt. Das maschinelle Verpacken der fortwährend bzw. kontinuierlich nacheinander abgeführten Produktreihen stellt eine vorteilhafte Möglichkeit für die Weiterverarbeitung der an der Portioniereinrichtung erzeugten bzw. geformten Produkte dar. Die mit der Transporteinrichtung bewegten Kugeln werden insbesondere über einen Abgabebereich der Transporteinrichtung in Verpackungen abgeführt bzw. übergeben, deren Abmessungen insbesondere auf die Abmaße der Kugeln und damit der Produktreihen abgestimmt sind. Jede erzeugte Produktreihe weist vorzugsweise wenigstens drei nebeneinander angeordnete Kugeln auf. Eine Produktreihe kann in Abhängigkeit von der Größe der zu erzeugenden Produkte eine beliebige Anzahl von dreidimensional geformten Produkten umfassen, wobei eine Produktreihe mit 8 bis 10 Produkten problemlos zu handhaben ist.

Ein mögliches Ausführungsbeispiel, aus dem sich weitere erfinderische Merkmale ergeben, ist unter Bezugnahme auf die beigefügten Figuren näher beschrieben. Hierbei zeigen:
- Figur 1:: eine perspektivische Ansicht einer erfindungsgemäßen Vorrichtung zum Herstellen und Abführen geformter Kugeln;
- Figur 2a:: eine Seitenansicht der erfindungsgemäßen Vorrichtung nach Figur 1;
- Figur 2b:: eine Seitenansicht der erfindungsgemäßen Vorrichtung in einer alternativen Ausrichtung;
- Figur 3.: eine Seitenansicht der erfindungsgemäßen Vorrichtung nach Figur 2b im Schnitt;
- Figur 4:: eine Draufsicht der erfindungsgemäßen Vorrichtung nach Figur 2b im Schnitt, und
- Figur 5:: eine Teilansicht einer erfindungsgemäßen Portioniereinrichtung als Schnittdarstellung quer zur Transportrichtung.

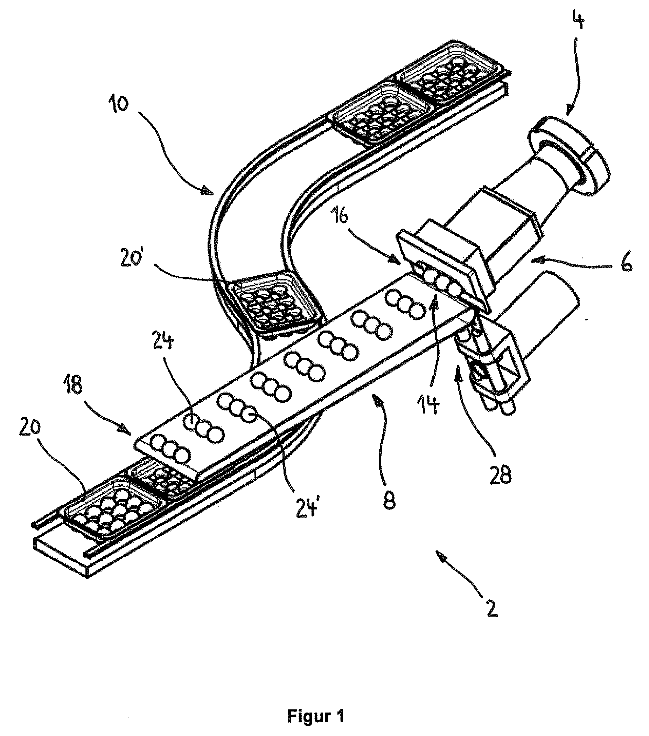

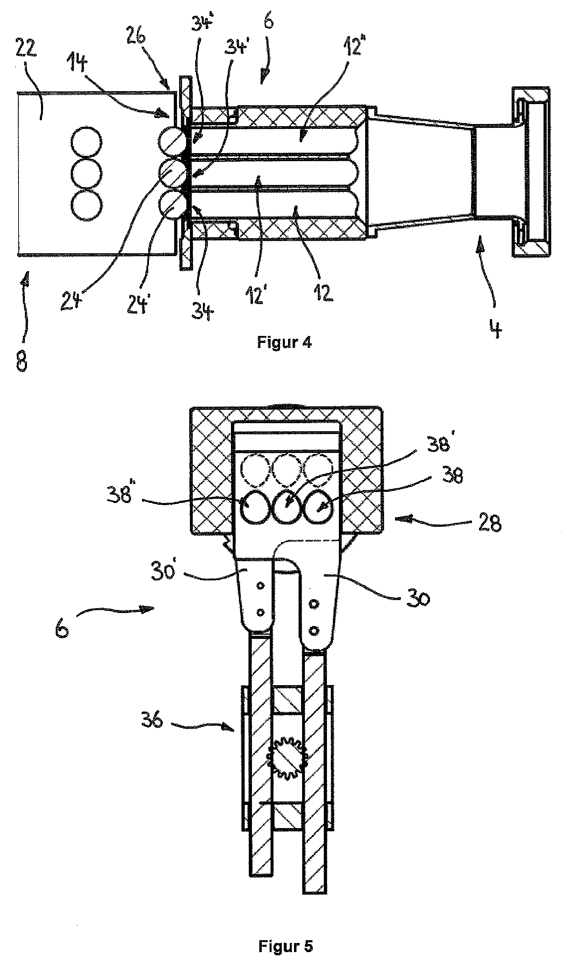

In Figur 1 ist eine Vorrichtung 2 zum Herstellen und Abführen dreidimensional geformter, kugelförmiger Produkte aus einer pastösen Masse gemäß der vorliegenden Erfindung dargestellt. Die Vorrichtung 2 weist eine Zuführeinrichtung 4 für die pastöse Masse auf, eine Portioniereinrichtung 6 zum Formen einer vorbestimmten Anzahl von Kugeln aus der pastösen Masse, eine Transporteinrichtung 8 zum Abführen der unmittelbar erzeugten Kugeln sowie eine Fördereinrichtung 10 für die Kugeln aufnehmende Verpackungen auf. Sämtliche Bestandteile der Vorrichtung 2 werden über einen nicht näher dargestellten Rahmen bzw. ein Gestell in der hier beispielhaft dargestellten Anordnung gehalten. Mit der Zuführeinrichtung 4 wird die pastöse Masse, wie zum Beispiel Wurstbrät, oder Teige, entlang eines Förderweges bewegt. In der Portioniereinrichtung 6 erfolgt die Aufteilung der pastösen Masse auf drei Förderkanäle 12, 12', 12" (Figur 4) und damit in drei vorzugsweise gleichmäßig unterteilte Teilströme.

Aus den drei Teilströmen werden mithilfe einer in die Förderkanäle hineinragenden Schneid- und/oder Formeinrichtung 28 in kontinuierlicher Abfolge dreidimensional geformte Kugeln 24, 24' erzeugt, die am Ende aus der Auslassöffnung 14 der Portioniereinrichtung abgegeben werden. Die Vorrichtung sieht einen Anschlag 16 zum Ausrichten der von der Portioniereinrichtung geformten Kugeln vor. Zur Ausbildung des Anschlags sind die Portioniereinrichtung 6 und die Transporteinrichtung 8 derart zueinander angeordnet, dass eine Anschlagfunktion bewirkt ist, sodass die Kugeln bevorzugt etwa quer zur Transportrichtung eine Reihe von nebeneinander ausgerichteten Produkten ausbilden. Die fortlaufend jeweils in vorbestimmten Zeitabständen erzeugten Produktreihen weisen insbesondere einen gleichmäßigen Abstand zueinander auf der Transporteinrichtung 8 auf, welche abschließend über einen Abgabebereich 18 der Transporteinrichtung 8 maschinell in Verpackungen 20, 20' abgefüllt werden. Die Verpackungen 20, 20' werden über die Fördereinrichtung 10 unterhalb des Abgabebereiches 18 der Transporteinrichtung 8 positioniert, wo sie zunächst befüllt und nach dem Befüllen dann zur Weiterverarbeitung abtransportiert werden.

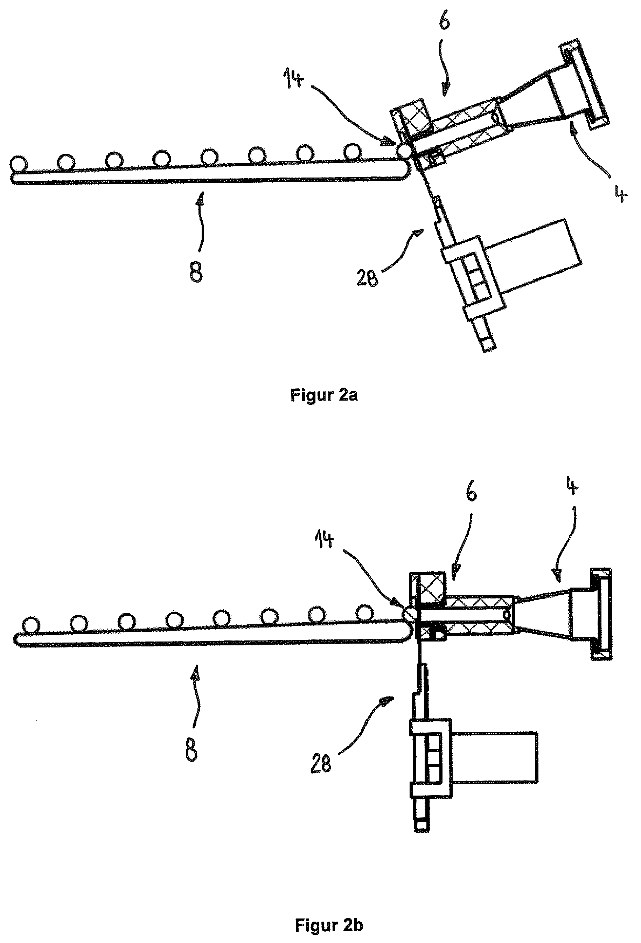

Die Figuren 2a und 2b zeigen mögliche Ausrichtungen der Portioniereinrichtung 6 und der Transporteinrichtung 8 zueinander. Die Zentralachse der Auslassöffnung 14 der Portioniereinrichtung 6 weist, bezogen auf eine hier dargestellte senkrechte, in Transportrichtung verlaufende Schnittebene, in Fig. 2a vorzugsweise zur Mittenachse des Transportelementes 22 einen Winkelversatz von etwa 20 Grad oberhalb der Mittenachse des Transportelementes 22 und in Fig. 2b eine ungefähr parallele Ausrichtung zur Mittenachse des Transportelementes auf. Mit den beiden Abbildungen sind beispielhafte Ausrichtungen der Portioniereinrichtung 6 und der Transporteinrichtung 8 zueinander gezeigt, welche in einem Winkelbereich von 10 Grad unterhalb der Mittenachse und 40 Grad oberhalb der Mittenachse des Transportelementes 22 liegen können.

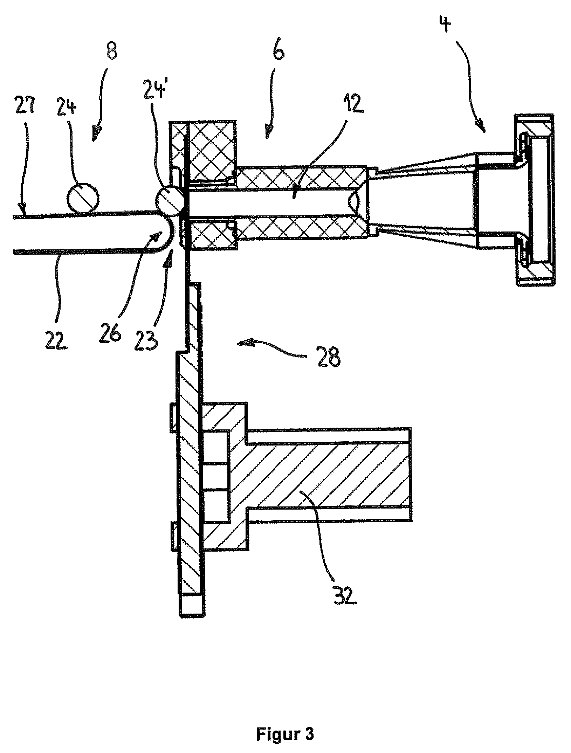

Figur 3 zeigt eine Detailansicht der Zuführeinrichtung 4 und der Portioniereinrichtung 6 im Schnitt, welche deren Aufbau und Funktion verdeutlichen soll. Zwischen der Portioniereinrichtung 6 und dem Transportelement 22 der Transporteinrichtung 8 ist ein Spalt bzw. eine Lücke 23 vorgesehen, welcher dazu eingerichtet ist, dass die geformten Kugeln 24, 24' zeitweise darin angeordnet sind. Dabei kommen die jeweils im Spalt 23 liegenden Kugeln 24, 24' mit einem Umlenkbereich 26 der Transporteinrichtung 8 so lange in Kontakt bzw. liegen daran an, bis diese Kugeln von den unmittelbar nachfolgenden geformten Kugeln auf das Transportelement 8 überführt werden. Die Portioniereinrichtung 6 und die Transporteinrichtung 8 sind in ihrer Höhe und im Abstand zueinander verstellbar ausgebildet, sodass in Abhängigkeit von der Größe und der Form der zu erzeugenden, als Kugeln ausgebildeten Produkte eine gezielte Ausrichtung der beiden Vorrichtungsbestandteile vorgenommen werden kann. Vorzugsweise weist die Auslassöffnung 14 der Portioniereinrichtung 6 einen Höhenversatz zur Oberseite 27 des Transportelementes 22 der Transporteinrichtung auf. Die aus der Portioniereinrichtung abgegebenen und im Spalt 23 kurzzeitig liegenden Kugeln 24, 24' müssen um auf die Oberseite 27 des Transportelementes 22 bewegt zu werden einen Höhenunterschied überwinden, der etwa einem Drittel des Durchmessers des Förderkanals 12 entspricht. Bevorzugt ist die Transporteinrichtung 8 ein Stetigförderer mit einem als Endlosband ausgebildeten Transportelement.

Wie Figur 3 weiterhin verdeutlicht, ist in einem Endbereich der Förderkanäle 12, 12', 12" kurz vor der Auslassöffnung 14 der Portioniereinrichtung 6 in einem Teilabschnitt eine Schneid- und/oder Formeinrichtung 28 angeordnet. Die Schneid- und/oder Formeinrichtung weist zwei relativ zueinander bewegliche Schneid- und/oder Formplatten 30, 30' (Figur 5) auf. Die Schneid- und/oder Formplatten werden über ein Antriebsmittel 32 quer zur Längsachse der Förder- oder Zuführkanäle 12 bis 12" bewegt und führen somit die Teilung bzw. Abtrennung der Produkte von den durch die Förderkanäle strömenden Teilströmen der pastösen Masse herbei.

In Figur 4 sind in einer Draufsicht die Zuführeinrichtung 4, die Portioniereinrichtung 6 und die Transporteinrichtung 8 in Teilschnitt dargestellt. Die Schnittdarstellung verdeutlicht die Ausgestaltung der Portioniereinrichtung 6 mit ihren Förderkanälen 12, 12', 12" in denen die pastöse Masse vorzugsweise gleichmäßig verteilt in Richtung der im Endbereich der Portioniereinrichtung angeordneten Schneid- und Formeinrichtungen 28 geführt wird. Die gleichmäßige Verteilung der pastösen Masse auf die Zuführkanäle wird beispielsweise mit einem nicht näher dargestellten Füllstromteiler erreicht. Die Förderrichtung der Portioniereinrichtung ist, bezogen auf die abgebildete horizontale Ebene, vorzugsweise parallel zur Transportrichtung der Transporteinrichtung ausgerichtet, wodurch die an den Auslässen 34, 34', 34" austretenden Kugeln 24, 24' sich vorteilhaft einfach am Transportelement 22, insbesondere dessen Umlenkbereich 26, ausrichten lassen. Die Auslässe 34 bis 34" für die zu formenden Kugeln 24, 24' sind dabei derart nebeneinander angeordnet, dass die ausgegebenen Produkte sich unmittelbar berühren oder derart dicht nebeneinander angeordnet sind, dass deren Abstand zueinander höchsten 5 mm beträgt.

Figur 5 zeigt eine Schnittdarstellung der Portioniereinrichtung 6 quer zur Förderrichtung der pastösen Masse und soll den Aufbau und die Funktionsweise der Schneid- und/oder Formeinrichtung 28 näher verdeutlichen. Die Schneid- und/oder Formeinrichtung 28 weist zwei Schneid- und/oder Formplatten 30, 30' auf, welche über das Antriebsmittel 32 jeweils aktiv in eine oszillierende Bewegung versetzt werden. Das vorzugsweise einen Elektromotor aufweisende Antriebsmittel 32 ist über ein zum Beispiel als Ritzel-Zahnstange-Trieb ausgebildetes Koppelgetriebe 36 mit den Schneid- und Formplatten 30, 30' verbunden. Die Schneid- und Formplatten 30, 30' weisen in Abhängigkeit von der Anzahl der Förderkanäle der Portioniereinrichtung 6 eine korrespondierende Anzahl von Durchbrüchen 38, 38', 38" auf, die an den Schneid- und Formplatten jeweils unmittelbar benachbart zueinander angeordnet sind. Ein zwischen den Durchbrüchen vorhandener Steg weist eine Breite von maximal 5 mm auf. Damit ist eine dichte Anordnung der zu erzeugenden bzw. zu formenden Produkte in einer Reihe nebeneinander gewährleistet. Weiterhin ist der Figur 5 zu entnehmen, dass die Durchbrüche 38, 38', 38" eine unrunde Formgebung in den Schneidplatten 30, 30' aufweisen. Die Umfänge der Durchbrüche sind zumindest abschnittsweise als Schneidkanten ausgebildet.

## Patentansprüche

1. Vorrichtung zum Herstellen und Abführen kugelförmig geformter Produkte aus einer pastösen Masse, wie Wurstbrät, Teig oder dergleichen,
mit einer Zuführeinrichtung (4) zum Bewegen der pastösen Masse entlang eines Förderweges,
einer der Zuführeinrichtung (4) nachgeschalteten Portioniereinrichtung (6) zum Formen der pastösen Masse zu Kugeln (24, 24'), und
einer Transporteinrichtung (8) zum Abführen der mittels der Portioniereinrichtung (6) erzeugten Kugeln,
**dadurch gekennzeichnet, dass** die Portioniereinrichtung (6) eine Auslassöffnung (14) mit einer Vielzahl so nebeneinander angeordneter Auslässe (34, 34', 34") für die zu formenden Kugeln (24, 24') aufweist, dass die ausgegebenen Produkte sich berühren oder so dicht nebeneinander angeordnet sind, dass der Abstand zwischen den hergestellten, nebeneinander angeordneten Kugeln kleiner als der Durchmesser der erzeugten Kugeln ist, und
dass die Portioniereinrichtung (6) und die Transporteinrichtung (8) derart zueinander angeordnet sind, dass Bereiche der Transporteinrichtung (8) in Transportrichtung eine Anschlagfunktion für die etwa quer zur Transportrichtung in einer Reihe nebeneinander auszurichtenden Kugeln (24, 24') ausbilden.

2. Vorrichtung nach Anspruch 1,
**dadurch gekennzeichnet, dass** zur Ausbildung der Anschlagfunktion zwischen der Transporteinrichtung (8) und der Portioniereinrichtung (6) ein Spalt (23) vorgesehen ist, welcher dazu eingerichtet ist, dass die geformten Kugeln (24, 24') zeitweise mindestens teilweise darin angeordnet sind.

3. Vorrichtung nach einem der Ansprüche 1 und 2,
**dadurch gekennzeichnet, dass** die Transporteinrichtung (8) ein die Transportbewegung umsetzendes Transportelement (22) umfasst, wobei die Auslassöffnung unmittelbar einem Umlenkbereich (26) des Transportelementes (22) zugeordnet ist.

4. Vorrichtung nach einem der Ansprüche 1 bis 3,
**dadurch gekennzeichnet, dass** die Portioniereinrichtung (6) und/oder die Transporteinrichtung (8) in ihrer Höhe und im Abstand zueinander verstellbar ausgebildet sind.

5. Vorrichtung nach einem der Ansprüche 1 bis 4,
**dadurch gekennzeichnet, dass** die Auslassöffnung (14) der Portioniereinrichtung (6) einen Höhenversatz zur Oberseite des Transportelementes (22) der Transporteinrichtung (8) aufweist.

6. Vorrichtung nach einem der Ansprüche 1 bis 5,
**dadurch gekennzeichnet, dass** die Förderrichtung der Portioniereinrichtung (6) etwa parallel zur Transportrichtung der Transporteinrichtung (8) ausgerichtet ist.

7. Vorrichtung nach einem der Ansprüche 1 bis 5,
**dadurch gekennzeichnet, dass** die Zentralachse der Auslassöffnung (14), bezogen auf eine senkrechte, in Transportrichtung verlaufende Schnittebene, zur Mittenachse des Transportelementes (22) einen Winkelversatz in einem Bereich von 10 Grad unterhalb der Mittenachse des Transportelementes (22) bis 40 Grad oberhalb der Mittenachse des Transportelementes (22) aufweist.

8. Vorrichtung nach einem der Ansprüche 1 bis 7,
**gekennzeichnet durch** einen Füllstromteiler für eine gleichmäßige Verteilung der pastösen Masse auf die einzelnen Förderkanäle (12, 12', 12") der Portioniereinrichtung (6).

9. Vorrichtung nach einem der Ansprüche 1 bis 8,
**dadurch gekennzeichnet, dass** die Portioniereinrichtung (6) wenigstens eine Schneideinrichtung (28) mit zwei aktiv bewegbaren Schneid- und/oder Formplatten (30, 30') umfasst.

10. Vorrichtung nach Anspruch 9,
**dadurch gekennzeichnet, dass** jede Schneid- und/oder Formplatte (30, 30') mehrere, unmittelbar nebeneinander angeordnete Durchbrüche (38, 38', 38") aufweist.

11. Vorrichtung nach einem der Ansprüche 1 bis 10,
**dadurch gekennzeichnet, dass** die Transporteinrichtung (8) einen Abgabebereich (18) für die Kugelreihen aufweist, dem eine Fördereinrichtung (10) für Verpackungen (20, 20') zugeordnet ist, welche zur Aufnahme der in Abständen zueinander vom Transportelement (22) abgegebenen Kugelreihen eingerichtet sind.

12. Verfahren zum Herstellen und Abführen kugelförmig geformter Produkte aus einer pastösen Masse, wie Wurstbrät, Teig oder dergleichen, bei dem eine pastöse Masse entlang eines Förderweges bewegt wird
fortlaufend Teile der pastösen Masse zu Kugeln (24, 24') geformt werden, wobei die Kugeln nach dem Ausgeben sich untereinander berühren oder so dicht nebeneinander angeordnet sind, dass der Abstand zwischen den hergestellten, nebeneinander angeordneten Kugeln kleiner als der Durchmesser der erzeugten Kugeln ist,
die Kugeln (24, 24') quer zu ihrer Förderrichtung in einer Reihe nebeneinander ausgerichtet werden, in dem die erzeugten Kugeln zeitweise mit einem Anschlag (16) in Anlage gelangen, und
anschließend die zueinander ausgerichteten Kugeln (24, 24') abgeführt werden.

13. Verfahren nach Anspruch 12, **dadurch gekennzeichnet, dass** die die geformten Kugeln (24, 24') ausgerichtet werden, in dem diese zeitweise mit einem Bereich der Transporteinrichtung (8) in Anlage gebracht werden.

14. Verfahren nach einem der Ansprüche 12 und 13,
**dadurch gekennzeichnet, dass** die an der Transporteinrichtung (8) ausgerichteten Kugeln (24, 24') zum Abführen auf die Transporteinrichtung (8) mittels der nachfolgend geformten Kugeln auf die Transporteinrichtung (8) bewegt werden.

15. Verfahren nach einem der Ansprüche 12 bis 14, **dadurch gekennzeichnet, dass** die geformten Kugeln (24, 24') unter einem vorbestimmten Winkel mit dem Transportelement (22) in Anlage gebracht werden.

16. Verfahren nach einem der Ansprüche 12 bis 15, **dadurch gekennzeichnet, dass** die in Abständen zueinander ausgerichteten Reihen von nebeneinander angeordneten Kugeln (24, 24') abgeführt und anschließend maschinell verpackt werden.

## Claims

1. Apparatus for producing and discharging spherically shaped products from a pasty material like sausage meat, dough or the like, comprising
a feed device (4) for moving the pasty material along a conveyor path,
a portioning device (6) connected downstream of the feed device (4) for shaping the pasty material into balls (24, 24'), and
a transport device (8) for discharging the balls produced by means of the portioning device (6),
**characterised in that** the portioning device (6) has an outlet opening (14) having a plurality of outlets (34, 34', 34") for the balls to be shaped (24, 24'), arranged in mutually juxtaposed relationship so that the delivered products touch each other or are arranged in so closely mutually juxtaposed relationship that the spacing between the mutually juxtaposed balls produced is less than the diameter of the balls produced, and
the portioning device (6) and the transport device (8) are so arranged relative to each other that regions of the transport device (8) in the transport direction provide an abutment function for the balls (24, 24') which are to be oriented in mutually juxtaposed relationship in a row substantially transversely relative to the transport direction.

2. Apparatus according to claim 1 **characterised in that** to afford the abutment function provided between the transport device (8) and the portioning device (6) is a gap (23) which is so adapted that the shaped balls (24, 24') are at times at least partially arranged therein.

3. Apparatus according to one of claims 1 and 2 **characterised in that** the transport device (8) has a transport element (22) implementing the transport movement, wherein the outlet opening is associated directly with a deflection region (26) of the transport element (22).

4. Apparatus according to one of claims 1 to 3 **characterised in that** the portioning device (6) and/or the transport device (8) are adapted to be adjustable relative to each other in their height and spacing.

5. Apparatus according to one of claims 1 to 4 **characterised in that** the outlet opening (14) of the portioning device (6) has a heightwise displacement relative to the top side of the transport element (22) of the transport device (8).

6. Apparatus according to one of claims 1 to 5 **characterised in that** the conveyor direction of the portioning device (6) is oriented approximately parallel to the transport direction of the transport device (8).

7. Apparatus according to one of claims 1 to 5 **characterised in that** the central axis of the outlet opening (14) with respect to a perpendicular section plane extending in the transport direction, relative to the central axis of the transport element (22), has an angular displacement in a region of 10 degrees below the central axis of the transport element (22) to 40 degrees above the central axis of the transport element (22).

8. Apparatus according to one of claims 1 to 7 **characterised by** a filling flow divider for uniform distribution of the pasty material to the individual conveyor passages (12, 12', 12") of the portioning device (6).

9. Apparatus according to one of claims 1 to 8 **characterised in that** the portioning device (6) has at least one cutting device (28) having two actively movable cutting and/or shaping plates (30, 30').

10. Apparatus according to claim 9 **characterised in that** each cutting and/or shaping plate (30, 30') has a plurality of directly mutually adjacently arranged through apertures (38, 38', 38").

11. Apparatus according to one of claims 1 to 10 **characterised in that** the transport device (8) has a delivery region (18) for the rows of balls, with which there is associated a conveyor device (10) for packagings (20, 20') which are adapted to receive the rows of balls delivered at spacings from each other from the transport element (22).

12. A process for producing and discharging spherically shaped products from a pasty material like sausage meat, dough or the like in which
a pasty material is moved along a conveyor path,
portions of the pasty material are ongoingly shaped into balls (24, 24'), wherein after delivery the balls touch each other or are arranged in so closely mutually juxtaposed relationship that the spacing between the mutually juxtaposed balls produced is less than the diameter of the balls produced,
the balls (24, 24') are oriented in a row in mutually juxtaposed relationship transversely relative to their conveyor direction, by the produced balls coming into contact at times with an abutment (16), and
then the mutually aligned balls (24, 24') are discharged.

13. A process according to claim 12 **characterised in that** the shaped balls (24, 24') are aligned by being brought at times into contact with a region of the transport device (8).

14. A process according to one of claims 12 and 13 **characterised in that** the balls (24, 24') which are aligned at the transport device (18) for discharge on to the transport device (8) are moved by means of the subsequently shaped balls on to the transport device (8).

15. A process according to one of claims 12 to 14 **characterised in that** the shaped balls (24, 24') are brought into contact with the transport element (22) at a predetermined angle.

16. A process according to one of claims 12 to 15 **characterised in that** the rows which are oriented at spacings relative to each other of mutually juxtaposed balls (24, 24') are discharged and then machine-packed.

## Revendications

1. Dispositif de fabrication et d'évacuation de produits moulés de manière à présenter une forme de boule, composés d'une matière pâteuse, tels que de la chair à saucisses, de la pâte ou similaire, comprenant
un système d'amenée (4) pour déplacer la matière pâteuse le long d'un trajet de transport,
un système pour former des portions (6) installé en aval du système d'amenée (4), pour mouler la matière pâteuse en des boules (24, 24'), et
un système de transport (8) pour évacuer les boules produites au moyen du système pour former des portions (6),
**caractérisé en ce que** le système pour former des portions (6) présente un orifice de sortie (14) pourvu d'une pluralité d'orifices (34, 34', 34") disposés les uns à côté des autres pour les boules (24, 24') à mouler de sorte que les produits distribués soient en contact ou sont disposés étroitement les uns à côté des autres de sorte que la distance entre les boules fabriquées, disposées les unes à côté des autres, soit inférieure au diamètre des boules produites, et
**en ce que** le système pour former des portions (6) et le système de transport (8) sont disposés de telle manière l'un par rapport à l'autre que des zones du système de transport (8) réalisent, dans la direction de transport, une fonction de butée pour les boules (24, 24') à orienter les unes à côté des autres en une rangée approximativement de manière transversale par rapport à la direction de transport.

2. Dispositif selon la revendication 1,
**caractérisé en ce qu'**est prévue, afin de réaliser la fonction de butée entre le système de transport (8) et le système pour former des portions (6), une fente (23), qui est mise au point afin d'y disposer au moins en partie de manière temporaire les boules (24, 24') formées.

3. Dispositif selon l'une quelconque des revendications 1 et 2,
**caractérisé en ce que** le système de transport (8) comprend un élément de transport (22) convertissant le déplacement de transport, dans lequel l'orifice de sortie est associé directement à une zone de renvoi (26) de l'élément de transport (22).

4. Dispositif selon l'une quelconque des revendications 1 à 3,
**caractérisé en ce que** le système pour former des portions (6) et/ou le système de transport (8) sont réalisés de manière à pouvoir être ajustés concernant leur hauteur et la distance l'un par rapport à l'autre.

5. Dispositif selon l'une quelconque des revendications 1 à 4,
**caractérisé en ce que** l'orifice de sortie (14) du système pour former des portions (6) présente un décalage en hauteur par rapport au côté supérieur de l'élément de transport (22) du système de transport (8).

6. Dispositif selon l'une quelconque des revendications 1 à 5,
**caractérisé en ce que** la direction de convoyage du système pour former des portions (6) est orientée approximativement de manière parallèle par rapport à la direction de transport du système de transport (8).

7. Dispositif selon l'une quelconque des revendications 1 à 5,
**caractérisé en ce que** l'axe central de l'orifice de sortie (14) présente, en lien avec un plan de coupe perpendiculaire s'étendant dans la direction de transport, par rapport à l'axe central de l'élément de transport (22), un décalage angulaire situé dans une plage allant de 10 degrés sous l'axe central de l'élément de transport (22) à 40 degrés au-dessus de l'axe central de l'élément de transport (22).

8. Dispositif selon l'une quelconque des revendications 1 à 7,
**caractérisé par** un séparateur de flux de remplissage pour une répartition homogène de la matière pâteuse sur les divers canaux de convoyage (12, 12', 12") du système pour former des portions (6).

9. Dispositif selon l'une quelconque des revendications 1 à 8,
**caractérisé en ce que** le système pour former des portions (6) comprend au moins un système de découpage (28) pourvu de deux plaques de découpage et/ou de moulage (30, 30') pouvant être déplacées de manière active.

10. Dispositif selon la revendication 9,
**caractérisé en ce que** chaque plaque de découpage et/ou de moulage (30, 30') présente plusieurs ajours (38, 38', 38") disposés directement les uns à côté des autres.

11. Dispositif selon l'une quelconque des revendications 1 à 10,
**caractérisé en ce que** le système de transport (8) présente une zone de transfert (18) pour les rangées de boules, auquel un système de convoyage (10) pour des emballages (20, 20') est associé, lequel est mis au point pour recevoir des rangées de boules transférées à distances les unes des autres par l'élément de transport (22).

12. Procédé de fabrication et d'évacuation de produits moulés de manière à présenter une forme de boule, composés d'une matière pâteuse, tels que de la chair à saucisses, de la pâte ou similaire, selon lequel une matière pâteuse est déplacée le long d'un trajet de convoyage, des parties de la matière pâteuse sont moulées en continu en des boules (24, 24'), dans lequel les boules sont en contact après la distribution ou sont disposées si étroitement les unes à côté des autres que la distance entre les boules fabriquées, disposées les unes à côté des autres, est inférieure au diamètre des boules produites,
les boules (24, 24') sont orientées les unes à côté des autres en une rangée de manière transversale par rapport à leur direction de convoyage en ce que les boules produites parviennent en appui de manière temporaire par une butée (16), et
les boules (24, 24') orientées les unes par rapport aux autres sont immédiatement après évacuées.

13. Procédé selon la revendication 12, **caractérisé en ce**
**que** les boules (24, 24') moulées sont orientées en ce qu'elles sont amenées en appui de manière temporaire par une zone du système de transport (8).

14. Procédé selon l'une quelconque des revendications 12 et 13,
**caractérisé en ce que** les boules (24, 24') orientées au niveau du système de transport (8) destinées à être évacuées sur le système de transport (8) sont déplacées sur le système de transport (8) au moyen des boules moulées ultérieurement.

15. Procédé selon l'une quelconque des revendications 12 à 14, **caractérisé en ce que** les boules (24, 24') moulées sont amenées en appui selon un angle prédéfini à l'aide de l'élément de transport (22).

16. Procédé selon l'une quelconque des revendications 12 à 15, **caractérisé en ce que** les rangées, orientées à distance les unes par rapport aux autres, de boules (24, 24') disposées les unes à côté des autres sont évacuées et sont emballées immédiatement après par machine.
